# FASCICULE DE BREVET EUROPEEN

(11) **EP 1 455 571 B1**
(45) Date de publication et mention de la délivrance du brevet: **22.08.2007**
(21) Numéro de dépôt: 02735530.4
(22) Date de dépôt: 02.05.2002
(51) Int. Cl.: A01K 47/06

(54) **DISPOSITIF DE FOND DE RUCHE**
BIENENKORBBASISVORRICHTUNG
BEEHIVE BASE DEVICE

(30) Priorité: 14.05.2001 FR 0106290
(43) Date de publication de la demande: 15.09.2004
(73) Titulaire: Le Pabic, Jean-Pierre, F-92500 Rueil Malmaison (FR)
(72) Inventeur: Le Pabic, Jean-Pierre, F-92500 Rueil Malmaison (FR)
(74) Mandataire: Schmit, Christian Norbert Marie
(86) Numéro de dépôt international: PCT/FR2002/001511
(87) Numéro de publication internationale: WO 2002/091816

(56) Documents cités:
- FR-A- 2 705 528
- US-A- 2 566 829

## Description

La présente invention a pour objet un dispositif de fond de ruche. Le domaine de l'invention est celui de l'apiculture, et plus particulièrement celui de la lutte contre les parasites des abeilles. Un tel parasite est par exemple Varroa Jacobsoni. Un des buts de l'invention est de pouvoir réutiliser en partie le matériel existant tout en augmentant l'efficacité de la lutte contre les parasites. Un autre but de l'invention est de réduire les coûts d'un fond de ruche permettant de lutter contre les parasites.

Dans le domaine de l'apiculture on connaît en particulier Varroa Jacobsoni. Ce parasite est un acarien vivant sur l'abeille et se nourrissant de son hémolymphe. Pour se reproduire, le parasite pénètre dans les cellules du couvain juste avant l'operculation et s'y reproduit en parasitant la nymphe. On sait aussi que Varroa Jacobsoni est un parasite très mobile et qu'au cours de ses déplacements, il chute vers le fond de la ruche d'où il doit remonter par la suite.

Dans l'état de la technique on connaît le brevet français 93 06484 qui enseigne un dispositif empêchant Varroa Jacobsoni de remonter. Ce dispositif de l'état de la technique est constitué par un plateau comportant des barreaux placés sous les cadres. Ces barreaux sont espacés de manière à permettre l'évacuation de Varroa Jacobsoni lors de sa chute. Ces barreaux sont fixés dans l'encadrement suite au façonnage, dans cet encadrement, d'évidements destinés à recevoir les extrémités de chacun des barreaux. Pour que le dispositif de l'état de la technique remplisse sa fonction, il faut que le façonnage soit précis, de manière à ce que Varroa Jacobsoni puisse être évacué, mais que les abeilles ne puissent pas sortir. Ce façonnage a donc un coût qui limite la généralisation du dispositif.

Un autre inconvénient du dispositif de l'état de la technique est que le mode de fixation des barreaux, par chacune de leurs extrémités, impose l'emploi de barreaux rigides et parfaitement rectilignes. De tels barreaux sont, dans l'état de la technique, des tubes en PVC ou en métacrylate dont les parois sont suffisamment épaisses pour respecter les contraintes ci-dessus. Cela entraîne naturellement un coût élevé.

Un autre inconvénient du dispositif de l'état de la technique est que sa réalisation pratique nécessite l'emploi d'un outillage spécialisé. Sa réalisation nécessite aussi le façonnage individuel des bords du dispositif. En d'autres termes, cela signifie que chaque bord de l'encadrement est façonné alors qu'il n'est pas solidaire des autres bords. Cela impose le démontage des encadrements existants. Cela impose aussi la mise en oeuvre de techniques permettant un montage, ou remontage, précis de l'encadrement.

L'invention résout ces problèmes en utilisant un matériau bon marché pour la réalisation des barreaux. Ces barreaux sont alors alignés grâce à des entretoises. Certaines de ces entretoises sont elles-mêmes fixées à l'encadrement. Un dispositif selon l'invention peut alors être simplement adapté sur un fond de ruche existant à l'aide d'une simple scie. Ainsi les coûts de réalisation et de mise en oeuvre d'un dispositif selon l'invention sont fortement réduits par rapport à l'état de la technique.

L'invention a donc pour objet un dispositif de fond de ruche comportant un encadrement dont la section correspond à la section horizontale de la ruche, l'intérieur de l'encadrement est évidé et comporte, sous un rayon de la ruche et parallèlement à ce rayon, un barreau, le voisinage latéral du barreau étant ajouré, caractérisé en ce que le barreau est fixé à l'encadrement par au moins une entretoise comportant au moins un évidement correspondant à la section du barreau.

L'invention sera mieux comprise à l'examen de la description qui suit et des figures qui l'accompagnent. Celles-ci sont présentées à titre indicatif et nullement limitatif de l'invention. Les figures montrent :
Figure 1 : Une vue en coupe latérale d'ensemble d'une ruche comportant un fond de ruche selon l'invention.
Figure 2 : Une vue de dessus d'un fond de ruche selon l'invention.
Figure 3 : Une illustration d'une entretoise d'extrémité.
Figure 4 : Une illustration d'une entretoise d'alignement

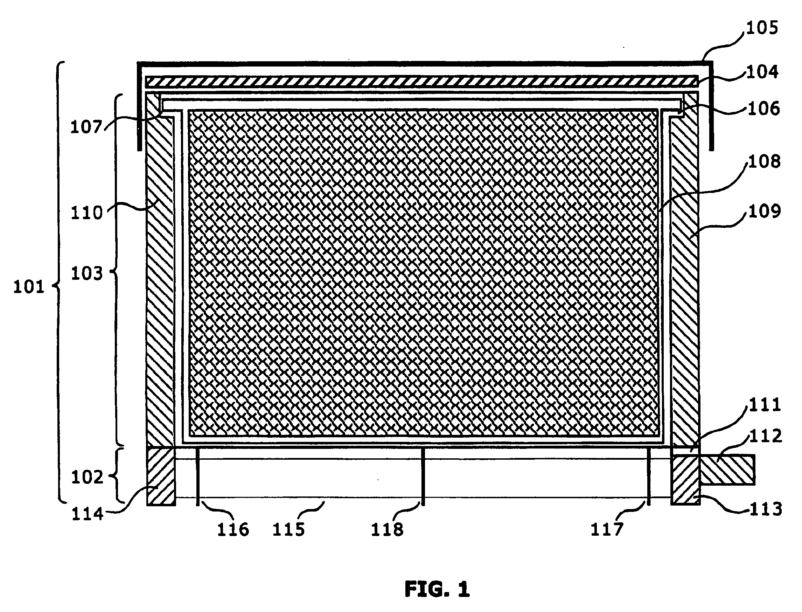

La figure 1 montre une ruche 101 comportant plusieurs éléments. Dans la pratique, ces éléments sont superposés et peuvent être fixés les uns aux autres par des moyens connus de l'homme du métier. L'élément inférieur est un fond 102 de ruche, encore appelé plateau de fond. La ruche 101 comporte aussi, posé sur le fond 102, un corps 103 de ruche. Le corps 103 et le fond 102 ont, au niveau de leur zone de contact, une section identique. Le corps 103 est surmonté par un plateau 104 couvre-cadres, lui-même surmonté par un toit 105 de ruche. Dans la pratique entre le corps 103 et l'ensemble formé par le plateau 104 et le toit 105, la ruche peut comporter une ou plusieurs hausses, non représentées sur la figure 1.

Le corps 103 comporte sur sa partie supérieure, c'est à dire celle qui est proche du plateau 104, deux saignées 106 et 107 pour la suspension des cadres 108. La saignée 106 est située sur la face avant 109 du corps 103, la saignée 107 est située sur la face arrière 110 du corps 103. La face 109 avant est celle qui est située du côté où se trouve le trou 111 d'abeilles. Le trou 111 est l'orifice qui permet aux abeilles d'entrer et de sortir de la ruche 101. Le trou 111 est un orifice situé entre le corps 103 et le fond 102. Au niveau du trou 111, le fond 102 comporte une planche 112 d'envol. Le niveau supérieur de la planche 112 correspond au niveau inférieur du trou 111. La face arrière de la ruche 101 est celle qui est opposé à la face avant.

Le bord supérieur du cadre 108 a une longueur légèrement supérieure à l'espacement qui existe entre l'intérieur des faces avant et arrière de la ruche 101, pour permettre la suspension du cadre. Le cadre 108 comporte, accroché à son bord supérieur, des moyens permettant d'y fixer un rayon dont la longueur est légèrement inférieur à l'espacement qui existe entre l'intérieur des faces avant et arrière de la ruche 101. Ainsi, lorsque l'on introduit l'ensemble cadre plus rayon dans la ruche 101, l'extrémité des bords supérieurs du cadre 108 appuie au niveau des saignée 106 et 107, assurant par là même la suspension du rayon dans la ruche 101. Le rayon s'étend donc dans une direction matérialisée par une droite perpendiculaire au faces 109 avant et 110 arrière de la ruche 101.

Le fond 102 comporte des bords avant 113 et arrière 114, solidarisés par des bords latéraux non représentés sur la figure 1. L'ensemble de ces bords forme un encadrement. Une fois la ruche montée, les bords du fond 102 servent de support aux faces du corps 103, exception faite de la face avant, puisque celle-ci est séparée du fond 102 par le trou 111 d'abeille.

La figure 1 montre que le fond 102 comporte un barreau 115 s'étendant de l'avant à l'arrière de la ruche 101. Le barreau 115 est maintenu par deux entretoises 116 et 117. L'entretoise 116 est située à proximité de l'arrière de la ruche 101. L'entretoise 117 est située à proximité de l'avant de la ruche 101. La figure 1 montre aussi une entretoise 118 d'alignement dont le rôle est précisé plus avant dans la description.

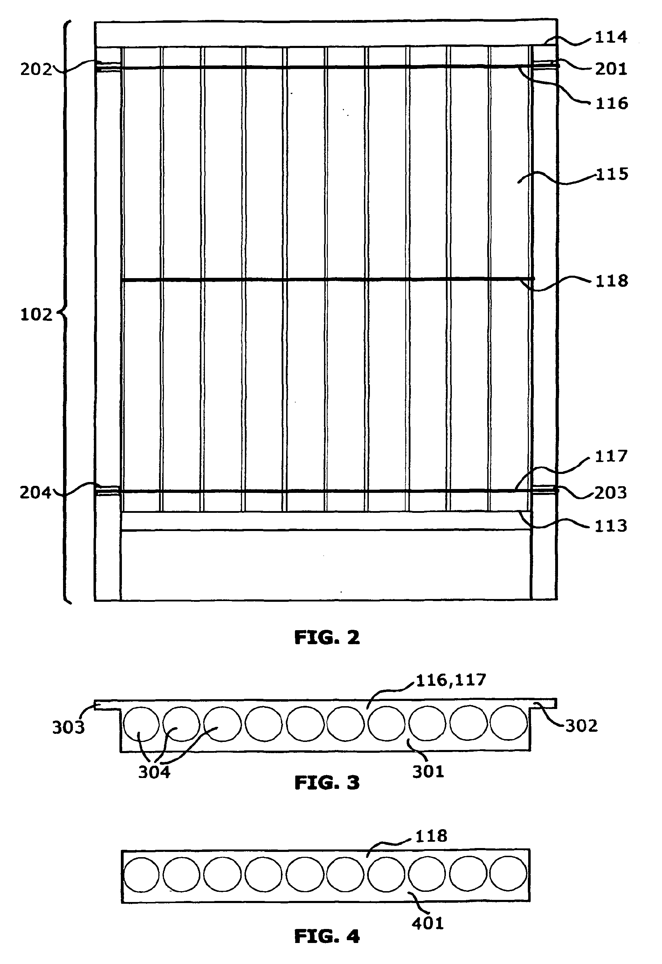

La figure 2 montre le fond 102 vu de dessus. Le fond 102 comporte plusieurs barreaux tels que le barreau 115. Ces barreaux sont de section circulaire et s'étendent donc de l'avant du fond 102 vers l'arrière du fond 102. Ces barreaux sont régulièrement espacés. L'espacement entre les barreaux varie, selon la réalisation du dispositif, entre 1 mm et 5 mm. L'espacement minimum correspond à la taille maximum de Varroa Jacobsoni. Dans une première variante, l'espacement maximum est tel qu'il empêche les abeilles de passer par cet espacement. Cela est utile, notamment lors du déplacement des ruches pour la transhumance. Dans ce cas, il suffit d'obturer le trou d'abeille pour être sur qu'aucune abeille ne s'échappe. Dans cette première variante, l'espacement maximum est alors de 3,5 mm.

Dans une deuxième variante, l'espacement maximal est déterminé par des considérations d'aération. Cependant, il ne faut pas non plus que des intrus, par exemple guêpes ou frelons, puissent s'introduire dans la ruche 101 par cet espacement. Dans cette deuxième variante, l'espacement maximum est alors de 5 mm.

L'enseignement de l'invention reste valable si l'espacement est supérieur à 5 mm, mais d'autre inconvénients apparaissent alors, comme l'intrusion possible d'intrus dont la présence est nuisible pour la ruche 101.

La figure 2 montre aussi que les bords latéraux du fond 102 comportent des saignées 201 à 204 destinées à recevoir des éléments des entretoises 116 et 117. Les entretoises 116 à 118 s'étendent dans le fond 102 selon une direction perpendiculaire à la direction dans laquelle s'étendent les barreaux 115. La longueur de la partie supérieure des entretoises 116 et 117 est supérieure à la largeur existant entre l'intérieur des bords latéraux du fond 102. La longueur de la partie inférieure des entretoises 116 et 117 est sensiblement égale, c'est à dire légèrement inférieure, à la largeur existant entre l'intérieur des bords latéraux du fond 102.

La figure 3 illustre une entretoise telle que l'entretoise 116 ou 117. L'entretoise 116 comporte une partie 301 centrale et deux excroissances 302 et 303. Les excroissances 302 et 303 sont situées aux extrémités de la partie 301 centrale, et dans le prolongement de la plus grande dimension de cette partie 301 centrale. Ces excroissances 302 et 303 sont de plus situées au niveau de la partie supérieure de la partie 301 centrale.

La partie 301 centrale comporte des évidements 304. La forme de ces évidements correspond à la section d'un barreau 115. Un évidement 304 permet donc l'introduction d'un barreau 115, et assure aussi son maintien. C'est à dire, une fois le barreau 115 introduit dans l'évidement 304, il n'y a plus de jeu entre le barreau 115 et l'entretoise 301.

Dans la pratique le fond 102 comporte autant de barreaux 115 que la ruche 101 comporte de cadres 108. L'entretoise 301 comporte donc autant d'évidements 304 que la capacité de la ruche 101, exprimée en nombre de cadres.

Les excroissances 303 et 302 viennent se loger dans les saignées 201 et 202 des bords latéraux du fond 102. L'entretoise est ainsi maintenue en place. Une fois le corps 103 en place sur le fond 102, l'entretoise 116 est solidaire de la ruche 101. L'entretoise 117 est identique à l'entretoise 116. Elle est cependant introduite dans les saignées 204 et 203. Pour retirer une entretoise 116 ou 117, il faut donc commencer par désassembler le fond 102 et le corps 103.

L'entretoise 118 est identique aux entretoises 116 et 117 si ce n'est qu'elle ne comporte pas d'excroissance à ses extrémités. La figure 4 montre que l'entretoise 118 comporte uniquement une partie 401 centrale similaire à la partie 301 centrale des entretoises 116 et 117.

Les saignées 202 et 201 sont situées sur des bords latéraux opposés du fond 102. Les saignées 202 et 201 sont situées à une première égale distance du bord 114 du fond 102. Les saignées 204 et 203 sont situées sur des bords latéraux opposés du fond 102. Les saignées 204 et 203 sont situées à une deuxième égale distance du bord 113 du fond 102. Dans la pratique, ces égales distances sont de l'ordre du centimètre. Dans une variante préférée, les première et deuxième distances sont égales.

Dans la pratique, l'entretoise 118 est située à mi-distance des bords 113 et 114 du fond 102.

Dans un exemple de réalisation, on considère que la largeur interne de la ruche 101 est de 375 millimètres. La largeur interne est la distance mesurée entre l'intérieur des faces latérales du corps 103. On considère de plus que les bords latéraux du fond 102 ont une épaisseur de 25 millimètre pour une hauteur de 50 millimètres. Dans ce cas, la partie 301 centrale des entretoises 116 et 117 a une longueur de 375 millimètres. La hauteur de ces entretoises est de 50 millimètres. Les excroissances 302 et 303 ont une hauteur de 10 millimètres et une longueur de 25 millimètres. Les excroissances portent la longueur totale des entretoises 116 et 117 à 425 millimètres.

Dans notre exemple, la ruche 101 comporte dix cadres au pas de 37,5 millimètres. Dans ce cas, les entretoises comportent chacune 10 évidements. Les évidements étant, dans notre exemple, circulaires les centres des évidements sont donc espacés de 37,5 millimètres. Les centres des évidements sont situés à 25 mm du haut de l'entretoise. Le rayon des évidements est de 17 millimètres, cela laisse donc un espace de 3,5 millimètres entre chaque évidement.

Dans le cas d'une ruche comportant 12 cadres, il suffit d'agrandir les entretoises en conséquence, de façon à pouvoir y ajouter deux évidements.

Le rôle des entretoises 116 et 117 est de solidariser les barreaux à la ruche. Le rôle de l'entretoise 118 est de pallier le manque éventuel de linéarité des barreaux. L'entretoise 118 permet donc de réduire les contraintes de choix des barreaux, et donc de sélectionner des barreaux bon marché. Notamment, dans un exemple préféré, les barreaux sont des tubes de polyéthylène d'épaisseur 0,4 millimètre.

Les entretoises 116 à 118 assurent aussi le positionnement des barreaux par rapport aux cadres 108 et les uns par rapport aux autres. Une fois en place, les entretoises assurent que chaque barreau est positionné sous un cadre. Ainsi, lorsque Varroa Jacobsoni tombe, il passe directement au travers de l'espacement inter-barreaux et arrive donc en dehors de la ruche. Dans la pratique, les cadres 108 sont parallèles, les barreaux sont donc parallèles eux aussi.

La matière dans laquelle sont réalisés les barreaux fait que leur entretien est grandement facilité, voire rendu inutile. En effet, il n'offre que très peu de prise et d'adhérence aux divers déchets produits par la ruche.

Dans une variante de l'invention, la section des barreaux peut être triangulaire, hexagonale, quadragonale, ou de forme convexe quelconque non susceptible de retenir les déchets et Varroa Jacobsoni.

Dans une autre variante de l'invention, on utilise un plus grand nombre d'entretoises. Dans ce cas, on peut utiliser en alternance des entretoises de type 116 et des entretoises de type 118 ou multiplier le nombre d'entretoises de type 118.

Dans une autre variante de l'invention, toutes les entretoises, en nombre quelconque, sont du type 116.

## Revendications

1. - Dispositif (102) de fond de ruche (101) comportant un encadrement (113, 114) dont la section correspond à la section horizontale de la ruche, l'intérieur de l'encadrement est évidé et comporte, sous un rayon de la ruche (108) et parallèlement à ce rayon, un barreau (115), le voisinage latéral du barreau étant ajouré, **caractérisé en ce que** le barreau est fixé à l'encadrement par au moins une entretoise (116, 117) comportant au moins un évidemment (304) correspondant à la section du barreau.

2. - Dispositif selon la revendication 1, **caractérisé en ce que** le barreau est fixé à l'encadrement par deux entretoises.

3. - Dispositif selon l'une des revendications 1 ou 2, **caractérisé en ce qu'**un bord latéral de l'encadrement comporte une saignée (201 à 204) pour maintenir une entretoise en place.

4. - Dispositif selon l'une des revendications 1 à 3, **caractérisé en ce qu'**il comporte plusieurs barreaux parallèles.

5. - Dispositif selon la revendication 4, **caractérisé en ce que** l'espacement entre les barreaux est compris entre 1 et 5 millimètres.

6. - Dispositif selon 'l'une des revendications 1 à 5, **caractérisé en ce que** la section d'un barreau est circulaire.

7. - Dispositif selon l'une des revendication 1 à 6 **caractérisé en ce que** les barreaux sont réalisé en matière peu adhérente, de préférence le polyéthylène.

8. - Dispositif selon l'une des revendications 1 à 7, **caractérisé en ce qu'**il comporte une entretoise (118) d'alignement, non fixé à l'encadrement.

9. - Dispositif selon l'une des revendications 1 à 8, **caractérisé en ce que** l'un des bords (113) de l'encadrement comporte un plateau d'envol.

10. - Dispositif selon l'une des revendications 1 à 9, **caractérisé en ce qu'**il est placé sous une ruche

## Claims

1. A beehive base (101) device (102) comprising a framing (113, 114) whose section corresponds to the horizontal section of the beehive, the inside of the framing is hollow and comprises, under a honeycomb (108) of the hive and parallel to this honeycomb, a bar (115), the lateral proximity of the bar being pierced, **characterized in that** the bar is fixed to the framing by at least one crosspiece (116, 117) comprising at least one aperture (304) corresponding to the section of the bar.

2. The device according to claim 1, **characterized in that** the bar is fixed to the framing by two crosspieces.

3. The device according to one of claims 1 or 2, **characterized in that** a lateral edge of the framing comprises a slot (201 to 204) to maintain a crosspiece in place.

4. The device according to one of claims 1 to 3, **characterized in that** the device comprises several parallel bars.

5. The device according to claim 4, **characterized in that** the space between the bars is between 1 and 5 millimeters.

6. The device according to one of claims 1 to 5, **characterized in that** the section of a bar is circular.

7. The device according to one of claims 1 to 6, **characterized in that** the bars are made of a low-adhesion material, preferably polyethylene.

8. The device according to one of claims 1 to 7, **characterized in that** the device comprises an alignment crosspiece (118), not fixed to the framing.

9. The device according to one of claims 1 to 8, **characterized in that** one of the edges (113) of the framing comprises a takeoff platform.

10. The device according to one of claims 1 to 9, **characterized in that** the device is placed under a beehive.

## Patentansprüche

1. Bodeneinrichtung (102) eines Bienenstocks (101), umfassend einen Rahmen (113, 114), dessen Querschnitt dem Horizontalschnitt des Bienenstocks entspricht, wobei das Innere des Rahmens ausgehöhlt ist und unter einer Wabe des Bienenstocks (108) und parallel zu dieser Wabe einen Stab (115) umfasst, wobei die seitliche Nachbarschaft des Stabes gelocht ist, **dadurch gekennzeichnet, dass** der Stab am Rahmen durch mindestens eine Querstrebe (116, 117) befestigt ist, die mindestens eine Aussparung (304) umfasst, die dem Querschnitt des Stabes entspricht.

2. Einrichtung nach Anspruch 1, **dadurch gekennzeichnet, dass** der Stab am Rahmen durch zwei Querstreben befestigt ist.

3. Einrichtung nach einem der Ansprüche 1 oder 2, **dadurch gekennzeichnet, dass** ein seitlicher Rand des Rahmens einen Spalt (201 bis 204) umfasst, um eine Querstrebe zu halten.

4. Einrichtung nach einem der Ansprüche 1 bis 3, **dadurch gekennzeichnet, dass** sie mehrere parallele Stäbe umfasst.

5. Einrichtung nach Anspruch 4, **dadurch gekennzeichnet, dass** der Abstand zwischen den Stäben zwischen 1 und 5 Millimeter beträgt.

6. Einrichtung nach einem der Ansprüche 1 bis 5, **dadurch gekennzeichnet, dass** der Querschnitt eines Stabes kreisförmig ist.

7. Einrichtung nach einem der Ansprüche 1 bis 6, **dadurch gekennzeichnet, dass** die Stäbe aus einem wenig haftenden Material, vorzugsweise Polyethylen, hergestellt sind.

8. Einrichtung nach einem der Ansprüche 1 bis 7, **dadurch gekennzeichnet, dass** sie eine Querstrebe (118) zur Ausrichtung umfasst, die nicht am Rahmen befestigt ist.

9. Einrichtung nach einem der Ansprüche 1 bis 8, **dadurch gekennzeichnet, dass** einer der Ränder (113) des Rahmens eine Abflugplatte umfasst.

10. Einrichtung nach einem der Ansprüche 1 bis 9, **dadurch gekennzeichnet, dass** sie unter einem Bienenstock angeordnet ist.
